# EUROPEAN PATENT SPECIFICATION

(11) **EP 2 380 948 B1**
(45) Date of publication and mention of the grant of the patent: **03.07.2019**
(21) Application number: 09838391.2
(22) Date of filing: 17.12.2009
(51) Int. Cl.: C09K 21/12, C08K 5/523, C08L 101/00, C07F 9/09, C07F 9/12

(54) **Method for preparing a phosphorus flame retardant composition**
Methode zur Herstellung einer flammhemmenden Harzzusammensetzung auf Phosphorbasis
METHODE DE PREPARATION D´UNE COMPOSITION DE RESINE IGNIFUGE AU BASE D´UN MATERIAU PHOSPHORE IGNIFUGE

(30) Priority: 19.01.2009 JP 2009008906
(43) Date of publication of application: 26.10.2011
(73) Proprietor: Daihachi Chemical Industry Co., Ltd., Osaka 541-0046 (JP)
(72) Inventor: OHTSUKI, Katsuichi, Osaka-shi Osaka 541-0046 (JP); TSUJI, Hiroshi, Handa-shi Aichi 475-0033 (JP)
(74) Representative: Zanoli, Enrico
(86) International application number: PCT/JP2009/071037
(87) International publication number: WO 2010/082426

(56) References cited:
- EP-A2- 0 509 506
- EP-A2- 0 822 197
- JP-A- 5 001 079
- JP-A- 2001 226 386

## Description

### TECHNICAL FIELD

The present invention relates to a process for preparing a phosphorus flame-retardant composition for resins.

### BACKGROUND ART

In order to impart flame retardancy to a thermoplastic or thermosetting resin, there has been adopted a method in which a flame retardant is added in the process of molding the resin into an article. Examples of the flame retardant include inorganic compounds, organophosphorus compounds, organohalogen compounds and halogen-containing organophosphorus compounds. Out of these compounds, organohalogen compounds and halogen-containing organophosphorus compounds exert an excellent flame-retardant effect. However, these halogen-containing compounds are pyrolyzed in the process of molding a resin to generate a hydrogen halide, which corrodes a metal mold, deteriorates the resin itself and causes coloration, degrading the working conditions. Another problem is that they generate a toxic gas such as a hydrogen halide, which is harmful to human bodies, when in a fire or incineration.

A halogen-free flame retardant is therefore desired.
Examples of such a flame retardant include inorganic compounds such as magnesium hydroxide and aluminum hydroxide; and nitrogen compounds such as melamine cyanurate, melamine phosphate and melamine polyphosphate. However, the inorganic compounds and the nitrogen compounds have a significantly low flame-retardant effect and therefore need to be added in a large amount to obtain a sufficient effect, leading to degradation of physical properties intrinsic to the resin.

As a flame retardant that is halogen-free and provides a relatively good flame-retardant effect, may be mentioned organophosphorus compounds, among which organophosphates are generally used. As a representative organophosphate, triphenyl phosphate (TPP) is well known. However, TPP is less heat-resistant and more volatile.
While recently developed high-performance plastics such as engineering plastics and super engineering plastics require a temperature as high as approximately 300°C for molding, TPP is thus not proof against such a high temperature.

For a flame retardant having thermostability and low volatility, therefore, studies have been made on flame retardants in a powdered state that are high-purity, well-moldable, and advantageous in terms of handling, packaging and transportation, focusing on aromatic diphosphates represented by the general formula (I) of the present invention (see Japanese Unexamined Patent Publication No. HEI 5(1993)-1079 (Patent Document 1) and Japanese Unexamined Patent Publication No. HEI 9(1997)-87290 (Patent Document 2)).

In the preparation method disclosed in Patent Document 1, a high-purity aromatic diphosphate is obtained by recrystallization or crystallization using a solvent in a purification step after a reaction. Such a method requires the steps of solid-liquid separation, drying and recycling of the solvent and has a low yield due to loss from dissolution to the solvent, and therefore is not necessarily advantageous in terms of preparation steps and costs, assuming in particular a large industrial scale.
Patent Document 2 therefore has proposed a method in which an aromatic diphosphate obtained is solidified and powdered without being subjected to a special purification process. According to the method of Patent Document 2, however, a phosphorus compound having a hydroxyphenyl group represented by the general formula (II) is present as a by-product in the aromatic diphosphate due to the absence of a special purification process.

When the aromatic diphosphate including the by-product is added as a flame retardant to a thermoplastic resin such as polycarbonate, it undergoes a transesterification reaction during a molding process, it reacts with an end of the resin molecular pyrolyzed, or it gradually exerts an adverse effect as a molded article of the resin is used for a long term, to reduce the molecular weight of the resin, and as a result, the durability, physical properties, water resistance, hydrolysis resistance and heat resistance of the molded article of the resin will be reduced.
In addition, the by-product undergoes transesterification with the aromatic diphosphate being a main component under a high-temperature condition such as in the molding process to cause further increase of the by-product, reducing the purity of the main component.

Japanese Unexamined Patent Publication No. 2003-160712 (Patent Document 3) discloses a flame-retardant composition based on a phosphorus compound having a hydroxyphenyl group represented by the general formula (II) of the present invention. Patent Document 3 considers application of the phosphorus compound as a reactive flame retardant for an epoxy resin by using the functional group (hydroxyphenyl group) of the compound of the general formula (II).
However, in additive flame retardants based on aromatic diphosphates represented by the general formula (I) of the present invention, compounds having a hydroxyphenyl group represented by the general formula (II) of the present invention are not preferable, because they cause the above-described problems.
EP 0 822 197 A2 discloses a process for preparing aromatic bisphosphates of high purity from which crystalline powders can be easily obtained. The process includes a first step of reacting an aromatic monohydroxy compound with a little excess amount of phosphorus oxyhalide, and a distillation treatment of the reaction mixture of the first step to remove the by-products other than the object compound.
This patent document, however, does not describe or suggest obtaining an aromatic diphosphate compound high in purity and yield without aftertreatment such as purification by adjusting the amount of the raw material.

### SUMMARY OF THE INVENTION

It is an object of the present invention to provide a process for preparing phosphorus flame-retardant composition which can minimize deterioration of mechanical properties of a thermoplastic resin when the resin is molded or when the molded article is used for a long term, and which can impart excellent durability and flame retardancy to the resin composition.

The present invention therefore provides a process for preparing phosphorus flame-retardant composition characterized in that it comprises an aromatic diphosphate compound represented by the general formula (I): 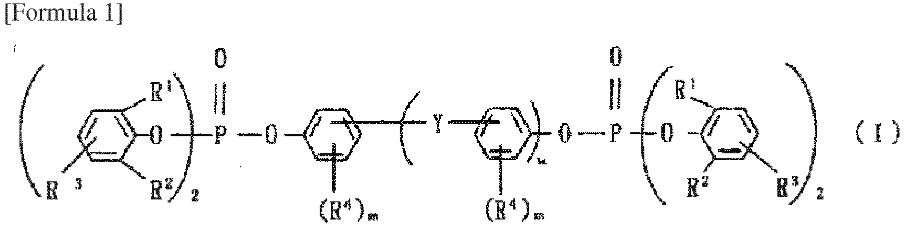 wherein R1 and R2 are, the same or different, a lower alkyl group, R3 and R4 are, the same or different, a hydrogen atom or a lower alkyl group, Y is a bonding arm, a -CH2-,-C(CH3)2-, -S-, -SO2-, -O-, -CO- or -N=N- group, k is 0 or 1, and m is an integer from 0 to 4, and it contains, as an impurity, a phosphorus compound having a hydroxyphenyl group represented by the general formula (II): 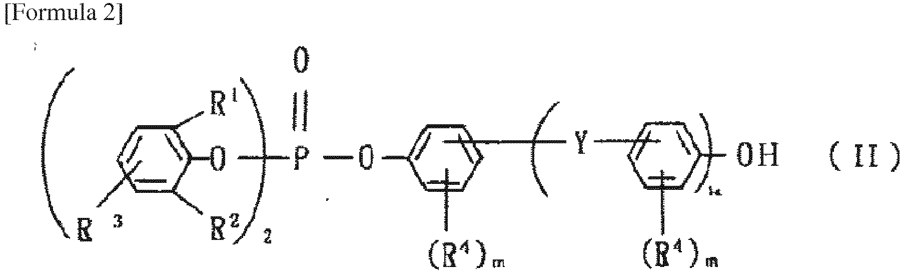 wherein R1, R2, R3, R4, Y, k and m are as defined in the general formula (I), the content of the phosphorus compound being 1% by area or less as determined by gel permeation chromatography (GPC), characterized in that said process comprises the following steps:
- Step 1, wherein an aromatic monohydroxy compound having a group for giving steric hindrance at the ortho position represented by the general formula (III): 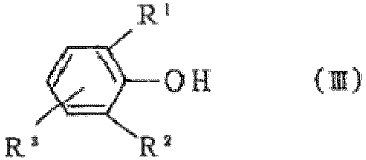
   wherein R1, R2 and R3 are as defined in the general formula (I),
   reacts with a phosphorus oxyhalide in the presence of a Lewis acid catalyst to obtain a diaryl phosphorohalidate represented by the general formula (IV): 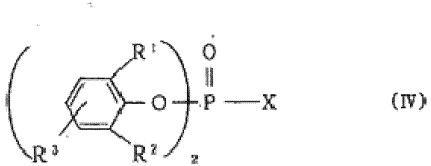 wherein R1, R2 and R3 are as defined in the general formula (I), and X represents a halogen; and
- Step 2, wherein the diaryl phosphorohalidate (IV) obtained in Step 1 reacts with an aromatic dihydroxy compound that is stoichiometrically equivalent to an amount of the diaryl phosphorohalidate (IV) calculated from an amount of the reaction mixture obtained in Step 1 and from a halogen concentration in the reaction mixture, said aromatic dihydroxy compound being represented by the general formula (V): 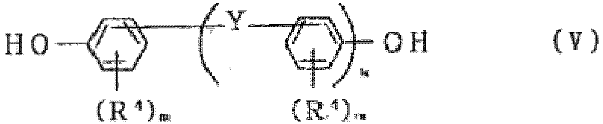
   wherein R4, Y, k and m are as defined in the general formula (I)
   in the presence of a Lewis acid catalyst.

The present invention can provide a process for preparing a phosphorus flame-retardant composition which can minimize deterioration of mechanical properties of a thermoplastic resin when the resin is molded or when the molded article is used for a long term, and which can impart excellent durability and flame retardancy to the resin composition. The durability referred to means resistance to temperature, humidity and ultraviolet rays, in particular.

### BEST MODE FOR CARRYING OUT THE INVENTION

A phosphorus flame-retardant composition prepared according to the process of the present invention is characterized in that it comprises an aromatic diphosphate compound represented by the general formula (I) (hereinafter, may be referred to as "aromatic diphosphate compound (I)"), and it contains, as an impurity, a phosphorus compound having a hydroxyphenyl group represented by the general formula (II) (hereinafter, may be referred to as "phosphorus compound (II) having a hydroxyphenyl group"), the content of the phosphorus compound being 1% by area or less as determined by GPC.
Regarding the content of the phosphorus compound (II) having a hydroxyphenyl group, "being 1% by area or less" as determined by GPC means that the content is "more than 0% by area and 1% by area or less". The lower limit of the content of the phosphorus compound (II) having a hydroxyphenyl group is preferably 0.01% by area, more preferably 0.001% by area and even more preferably 0.0001% by area. The upper limit thereof is preferably 0.9% by area, more preferably 0.8% by area and even more preferably 0.7% by area.
The content of the aromatic diphosphate compound (I) is preferably 95% by area or more as determined by GPC.

The phosphorus flame-retardant composition of the present invention can be synthesized by the preparation method disclosed in Japanese Unexamined Patent Publication No. HEI 5(1993)-1079 (Patent Document 1), for example.
That is, as Step 1, an aromatic monohydroxy compound having a group for giving steric hindrance at the ortho position represented by the general formula (III): 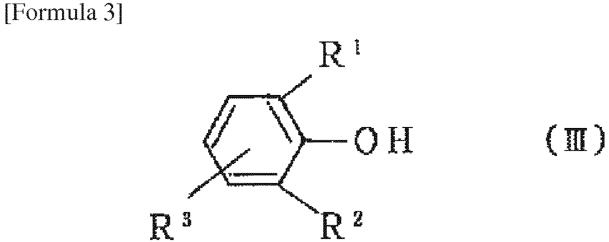 wherein R1, R2 and R3 are as defined in the general formula (I) (hereinafter may be referred to as "aromatic monohydroxy compound (III)") and a phosphorus oxyhalide are reacted in the presence of a Lewis acid catalyst, and then an organic solvent, and unreacted aromatic monohydroxy compound (III) and phosphorus oxyhalide are removed under a reduced pressure, if necessary, to obtain a diaryl phosphorohalidate represented by the general formula (IV); 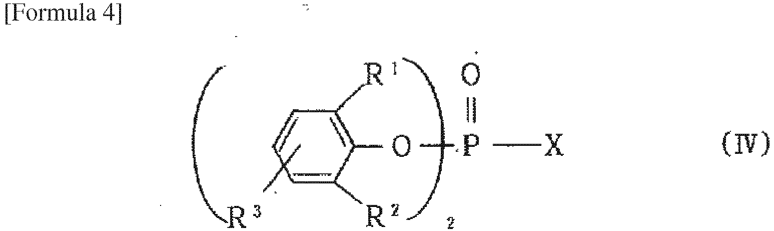 wherein R1, R2 and R3 are as defined in the general formula (I), and X represents a halogen (hereinafter, may be referred to as "diaryl phosphorohalidate (IV)").

Next, as Step 2, the diaryl phosphorohalidate (IV) obtained in Step 1 and an aromatic dihydroxy compound represented by the general formula (V): 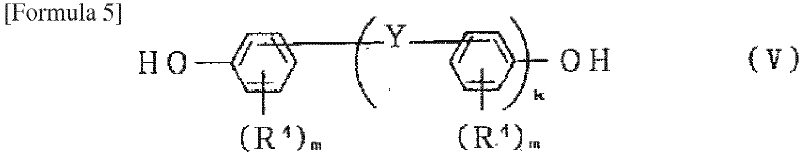 wherein R4, Y, k and m are as defined in the general formula (I) (hereinafter, may be referred to as "aromatic dihydroxy compound (V)") are reacted in an organic solvent in the presence of a Lewis acid catalyst, and then the organic solvent and the catalyst are removed from the resulting reaction mixture to obtain an oily matter containing an aromatic diphosphate compound (I) as a main component.

Next, the oily matter obtained in Step 2 can be powdered according to the method disclosed in Japanese Unexamined Patent Publication No. HEI 9(1997)-87290 (Patent Document 2), for example.
Specifically, the oily matter is stressed to be solidified and powdered in a temperature-controllable kneader at a temperature 5 to 100°C lower than the melting point of the aromatic diphosphate compound (I) to obtain a solid or powdered crystalline phosphorus flame-retardant composition containing the aromatic diphosphate compound (I) as a main component.

The present invention will be further described in detail based on reaction schemes.

### 1. Step 1

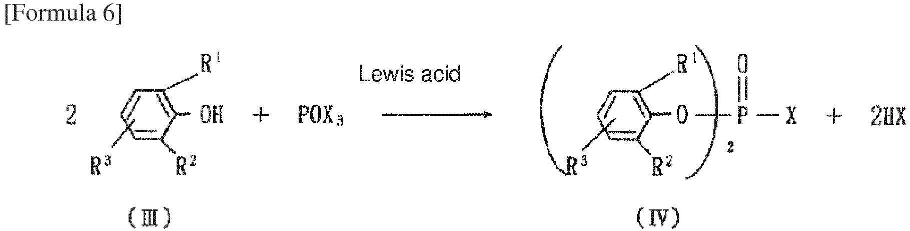

wherein R1 and R2 are, the same or different, a lower alkyl group, and R3 is a hydrogen atom or a lower alkyl group.
The "lower alkyl group" represented by R1, R2 and R3 means a linear or branched alkyl group having 1 to 5 carbon atoms such as, for example, methyl, ethyl, propyl, isopropyl, n-butyl, isobutyl, tert-butyl, n-pentyl, isopentyl and neo-pentyl, among which methyl group is particularly preferable.

That is, specific examples of the aromatic monohydroxy compounds (III) having a group for giving steric hindrance at the ortho position include 2,6-xylenol and 2,4,6-trimethylphenol, of which 2,6-xylenol is particularly preferable.

Examples of the phosphorus oxyhalide include phosphorus oxychloride, phosphorus oxybromide, of which phosphorus oxychloride is particularly preferable.

Examples of the Lewis acid catalyst used in the reaction in Step 1 include aluminum chloride, magnesium chloride, titanium tetrachloride, antimony pentachloride, zinc chloride and tin chloride, among which magnesium chloride is particularly preferable. These compounds may be used as a mixture of two or more kinds thereof.
The amount of the catalyst to use in Step 1 is 0.1% by weight or more, preferably in a range of 0.5 to 2.0% by weight with respect to the phosphorus oxyhalide.

Basically, the phosphorus oxyhalide is used usually at a proportion of 0.5 molar equivalents with respect to 1 mol of the aromatic monohydroxy compound (III). When the amount of the phosphorus oxyhalide is too large, the ratio of by-product arylphosphoro dihalidate will be higher, and a higher by-product condensate will be produced between the arylphosphoro dihalidate and the aromatic dihydroxy compound (V) in Step 2. When the amount of the phosphorus oxyhalide is too small, the ratio of by-product triarylphosphate will be higher. In any case, the purity of the main component will be reduced.

However, the phosphorus oxyhalide and the aromatic monohydroxy compound (III) easily being evaporated together with a by-product hydrogen halide resulting from the reaction, and therefore the mole ratio between the compounds tends to alter, which is particularly significant in the case of an industrial scale. It is therefore preferable to appropriately adjust the mole ratio between the phosphorus oxyhalide and the aromatic monohydroxy compound (III) according to the production scale.

The reaction temperature is 50 to 250°C, preferably 100 to 200°C. The pressure in the reaction system may be reduced in order to remove the by-product hydrogen halide resulting from the reaction out of the reaction system and accelerate the reaction.

Though a reaction solvent is not necessarily needed in Step 1, it may optionally be used. Examples of the solvent include organic solvents such as xylene, toluene, chlorobenzene and dichlorobenzene.

After completion of the reaction, the organic solvent, and unreacted aromatic monohydroxy compound (III) and phosphorus oxyhalide are removed under a reduced pressure of 30 kPa or less. Since the pressure reduction is to remove low-boiling components, the pressure is preferably 20 kPa or less, and more preferably 10 kPa or less.

In Step 1, the diaryl phosphorohalidate (IV) in the reaction product has a purity of usually as high as 99% or more, and therefore can be used in Step 2 without going through purification.

### 2. Step 2

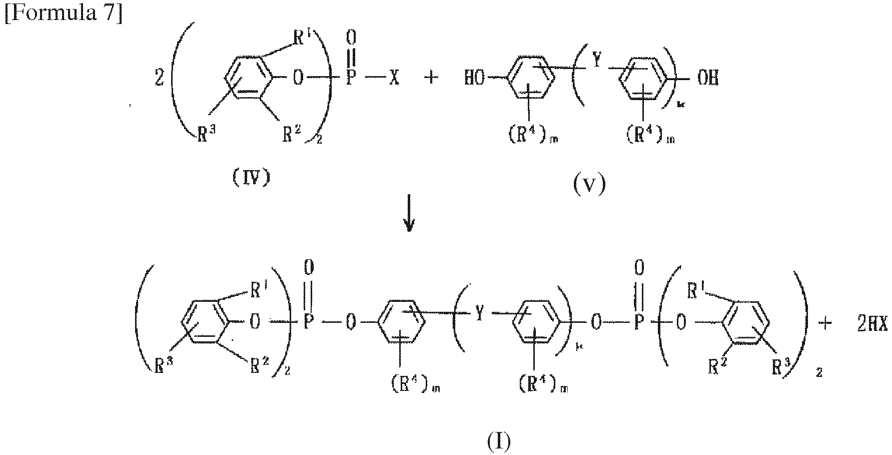

wherein R4 is a hydrogen atom or a lower alkyl group.
The "lower alkyl group" represented by R4 means a linear or branched alkyl group having 1 to 5 carbon atoms such as, for example, methyl, ethyl, propyl, isopropyl, n-butyl, isobutyl, tert-butyl, n-pentyl, isopentyl and neo-pentyl.

That is, specific examples of the aromatic dihydroxy compound (V) include hydroquinone, resorcinol, pyrocatechol, 4,4'-biphenol, 2,2',6,6'-tetramethyl-4,4'-biphenol, bisphenol A, bisphenol S, bisphenol F, tetramethyl bisphenol A, tetramethyl bisphenol F, 4,4'-dihydroxydiphenyl ether and 4,4'-thiodiphenol, among which hydroquinone, resorcinol and 4,4'-biphenol are particularly preferable.

As the Lewis acid catalyst usable for the reaction in Step 2, the Lewis acid catalyst in Step 1 may be mentioned, and the Lewis acid catalyst used in Step 1 as is may be used for the reaction in Step 2 without being removed after the reaction in Step 1 or a further Lewis acid catalyst may be added. As the Lewis acid catalyst to add, aluminum chloride is particularly preferable. Alternatively, an amine such as, for example, triethylamine and tributylamine may be used instead of or in combination with the Lewis acid catalyst.
The amount of the catalyst to use in Step 2 is 0.1% by weight or more, preferably in a range of 0.5 to 5.0% by weight with respect to the phosphorus oxyhalide used in Step 1.

The aromatic dihydroxy compound (V) is used at a proportion of 0.5 molar equivalents with respect to the diaryl phosphorohalidate (IV).

The reaction temperature is 50 to 250°C, preferably 100 to 200°C. The pressure in the reaction system may be reduced in order to remove the by-product hydrogen halide resulting from the reaction out of the reaction system and accelerate the reaction.

After completion of the reaction, impurities such as the catalyst in the reactant are washed and removed by a commonly known method. For example, the reactant is brought into contact with an aqueous solution of an acid such as hydrochloric acid to extract the impurities into the aqueous solution.
On this occasion, an organic solvent may be added to prevent the aromatic diphosphate (I) from solidifying.
As the organic solvent, preferable is an organic solvent that allows more aromatic diphosphate (I) to dissolve therein at high temperature and less aromatic diphosphate (I) to dissolve therein at low temperature. Non-limiting examples of such an organic solvent include toluene, xylene, chlorobenzene, dichlorobenzene and a mixed solvent of two or more kinds thereof.
The temperature for the treatment is from room temperature to the boiling point of the aqueous solution. The amount of the organic solvent to use is not particularly limited as long as the aromatic diphosphate (I) is not precipitated at the temperature for the treatment, at least.

When the above-described preparation steps are carried out on an industrial scale, the phosphorus oxyhalide and the aromatic monohydroxy compound (III) easily being evaporated together with the by-product hydrogen halide produced in the preparation of the diaryl phosphorohalidate (IV) in Step 1, and therefore it is difficult to precisely generate 1 mol of the diaryl phosphorohalidate (IV) from 2 mol of the aromatic monohydroxy compound (III). That is, due to the evaporation of the aromatic monohydroxy compound (III), the number of moles of the diaryl phosphorohalidate (IV) generated falls below 1/2 molar equivalents of the number of moles of the material compound (III) in Step 1. Besides, the larger the industrial scale is and the larger the amount of the by-product hydrogen halide produced per unit time in Step 1 is, the more significant such a phenomenon is.

Since Step 1 and Step 2 are carried out successively in the same reaction vessel on the industrial scale, Step 2 will be affected by the reaction in Step 1. That is, theoretically, the amount of the aromatic dihydroxy compound (V) in Step 2 should be 1/4 molar equivalents of the amount of the aromatic monohydroxy compound (III), but actually falls below 1/4 molar equivalents. In Step 2, therefore, the aromatic dihydroxy compound (V) is not completely consumed and remains unreacted. That is, some hydroxy groups of the aromatic dihydroxy compound (V) remain in the reaction. As a result, the phosphorus compound (II) having a hydroxyphenyl group is contained in the aromatic diphosphate (I).

Here, the "industrial scale" referred to means that the total amount of the aromatic dihydroxy compound (V) and the diaryl phosphorohalidate (IV) to be subjected to the reaction is on a scale of normal industrial production. On the scale, the specific total amount is preferably 5 liters or more, more preferably 30 liters or more, even more preferably 100 liters or more, and particularly preferably 300 liters or more.
In addition, the specific total amount of these materials is preferably 20000 liters or less, and more preferably 10000 liters or less considering constraint of the reactor.

The most effective way to obtain the phosphorus flame-retardant compound of the present invention comprising the aromatic diphosphate compound (I) and, as an impurity, the phosphorus compound (II) having a hydroxyphenyl group, the content of the aromatic diphosphate compound (I) preferably being 95% by area or more as determined by GPC, the content of the phosphorus compound (II) being 1% by area or less as determined by GPC is to use the aromatic dihydroxy compound (V) in a theoretical amount needed for turning all the diaryl phosphorohalidate (IV) generated in Step 1 into a condensed phosphate, that is, the aromatic diphosphate compound (I), in other words, to use the aromatic dihydroxy compound (V) stoichiometrically equivalent to the diaryl phosphorohalidate (IV) in Step 2.

The theoretical amount needed for turning all the diaryl phosphorohalidate (IV) into a condensed phosphate is an amount needed for substituting all the halogen atoms included in the diaryl phosphorohalidate (IV) for aryl ester groups, for example, 1 mol of the aromatic dihydroxy compound (V) is needed with respect to 2 mol of the diaryl phosphorohalidate (IV). Specifically, such a theoretical amount can be calculated from the amount and the halogen concentration of the reaction mixture after Step 1.
As described above, the phosphorus flame-retardant compound of the present invention can be obtained by adjusting the amount of the aromatic dihydroxy compound (V) to use in Step 2.

The aromatic diphosphate compound and the phosphorus compound having a hydroxyphenyl group are preferably a combination of tetrakis(2,6-dimethylphenyl)-m-phenylene-bisphosphate and bis(2,6-dimethylphenyl)-3-hydroxyphenylphosphate, tetrakis(2,6-dimethylphenyl)-p-phenylene-bisphosphate and bis(2,6-dimethylphenyl)-4-hydroxyphenylphosphate, or tetrakis (2,6- dimethylphenyl)-4,4'-diphenylenebisphosphate and bis(2,6-dimethylphenyl)-4'-hydroxyphenyl-4-phenylphosphate, among which the combination of tetrakis(2,6-dimethylphenyl)-m-phenylene-bisphosphate and bis(2,6-dimethylphenyl)-3-hydroxyphenylphosphate is particularly preferable.

Other than the aromatic diphosphate compound (I) as a main component and the phosphorus compound (II) having a hydroxyphenyl group as an impurity, the phosphorus flame-retardant compound of the present invention generates an aromatic monophosphate represented by the general formula (VI): 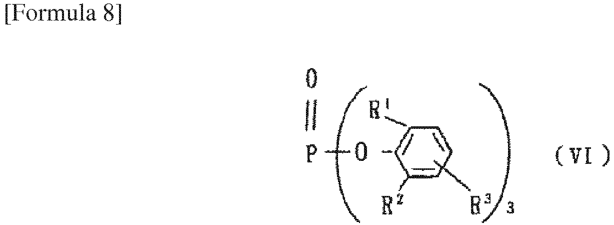 wherein R1, R2 and R3 are as defined in the general formula (I) (hereinafter, may be referred to as "aromatic monophosphate (VI)") and an aromatic triphosphate represented by the general formula (VII): 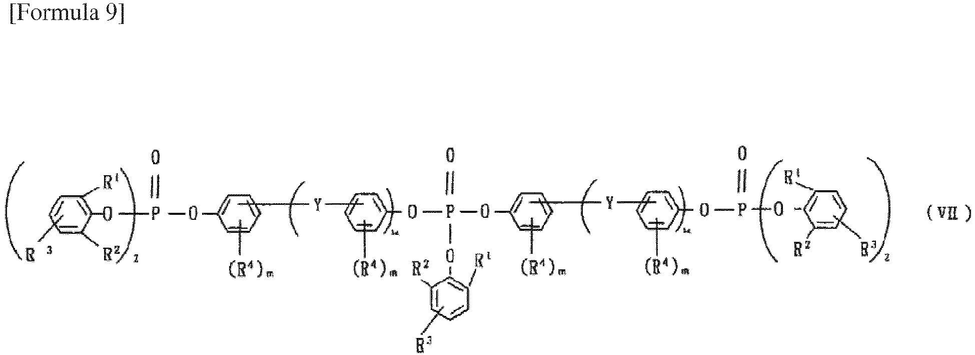 wherein R1, R2, R3, R4, Y, k and m are as defined in the general formula (I) (hereinafter, may be referred to as "aromatic triphosphate (VII)") at the same time.
However, the aromatic monophosphate (VI) and the aromatic triphosphate (VII) have no adverse effect on resin as having no hydroxyphenyl group.

### 3. Powdering step

The oily matter obtained in Step 2 can be powdered by stressing the same with a kneader generally used for kneading plastic materials at a temperature 5 to 100°C lower than the melting point of the aromatic diphosphate compound (I).

By "kneading" is meant, when a plastic material is mixed with several kinds of additives, dispersing the additives uniformly in the material by giving shear force to the material and the additives at the same time.

By "stressing" is meant the same as the "kneading" in that the temperatures of the materials fed to the kneader are equalized and, at the same time, shear force, that is, stress is given to the materials.

Generally, kneaders are categorized into batch kneaders such as mixing rolls, sigmate blade type kneaders and intensive mixers; and continuous kneaders such as high-speed twin-screw continuous mixers and extruder type kneaders. When these kneaders are used for solidification, the continuous kneaders are preferable as being capable of compressing a solidified product at the same time as the kneading. In terms of industrial use, in addition, the continuous kneaders are advantageous as having higher processing performance.

As a particularly suitable kneader, may be mentioned a ko-kneader type kneader, which is a kind of extruder type kneaders and has strong shear force, produces a great kneading effect and is capable of continuous solidification and powdering. However, the kneader is not particularly limited thereto as long as the kneader produces such effects.
In addition, the kneader includes a heating mechanism such as an electrical resistance band heater, a cast-in aluminum heater and a dielectric heating system, and a heating or cooling mechanism by distributing water or oil in a jacket provided to a cylinder or in a pipe provided to a screw, so that the temperature in the kneader can be controlled.

The inside of the kneader needs to be controlled to an appropriate temperature range. The most appropriate temperature range varies according to, in particular, viscosity, fluidity and frictional heat in the kneading as well as thermophysical properties of the oily matter to solidify, and properties of the apparatus to use. The temperature is generally 5 to 100°C lower, preferably 10 to 70°C lower, and more preferably 10 to 50°C lower than the melting point of the aromatic diphosphate. When the temperature is in this range, an appropriate stress is applied to the compound in the kneader to achieve complete solidification and shortening of the solidification time. Using no solvent for the powdering, the method excludes the step of drying the powder and excludes need to consider purification and recycling of the solvent, being advantageous for industrial production.

Examples of the method for powdering the oily matter obtained in Step 2 further include purification processes such as a recrystallization method using an organic solvent and a fractionation distillation method.
Examples of the organic solvent to use in the recrystallization method include alcohols such as methanol, ethanol, n-propanol, isopropanol, n-butanol and isobutanol; ketones such as acetone, methyl ethyl ketone and methyl isobutyl ketone; aromatic hydrocarbons such as benzene, toluene, xylene and ethyl benzene; halogenated aromatic hydrocarbons such as chlorobenzene and dichlorobenzene; and organic compounds generally used as solvents.
The recrystallization method can further reduce the content of the phosphorus compound (II) having a hydroxyphenyl group than the powdering with a kneader.

The phosphorus flame-retardant composition of the present invention is high-quality and usable as a flame retardant for various thermoplastic resins and thermosetting resins. Examples of the thermoplastic resins include polyethylene resins, chlorinated polyethylenes, polypropylene resins, polybutadiene resins, polystyrene resins, polyvinyl chloride resins, polyphenylene ether resins, polyphenylene sulfide resins, polycarbonate resins, ABS (acrylonitrile-butadiene-styrene) resins, high impact styrene resins, SAN (styrene-acrylonitrile) resins, ACS resins, polyamide resins, polyimide resins, polyester resins, polyacrylic resins, polymethacryl resins, polyetheretherketones, polyethersulfones, polysulfones, polyarylates, polyether ketones, polyether nitriles, polythioether sulfons, polybenzimidazoles, polycarbodiimides, liquid crystal polymers and composite plastics. They can be used independently or in combination of two or more kinds thereof.

Examples of the thermosetting resins include epoxy resins, polyurethane resins, polyimide resins, phenol resins, novolac resins, polyetherimide resins, melamine resins, urea resins, unsaturated polyesters and diallyl phthalate resins. They can be used independently or in combination of two or more kinds thereof.

Out of these resins, may be mentioned engineering plastics and super engineering plastics, which are high-performance and have a high molding process temperature and heatproof temperature, such as polyphenylene ether resins, polyphenylene sulfide resins, polycarbonate resins, ABS (acrylonitrile-butadiene-styrene) resins, high impact styrene resins, SAN (styrene-acrylonitrile) resins, polyamide resins, polyimide resins, polyester resins, polyacrylic resins, polymethacryl resins, polyether ether ketone resins, polyether sulfone resins, polysulfones, polyarylate resins, polyether ketones, polyether nitriles, polythioether sulfons, polybenzimidazoles, polycarbodiimides, liquid crystal polymers, composite plastics, epoxy resins, melamine resins and unsaturated polyester resins, as resins for which the phosphorus flame-retardant composition of the present invention can fulfill a sufficient function. In particular, polycarbonate resins, polyphenylene ether resins, rubber-modified styrene resins, polyester resins, polyamide resins and epoxy resins are preferable.

The flame-retardant resin composition of the present invention is therefore characterized by comprising: one or more kinds of resins selected from polycarbonate resins, polyphenylene ether resins, rubber-modified styrene resins, polyester resins, polyamide resins and epoxy resins; and the phosphorus flame-retardant composition of the present invention.

The phosphorus flame-retardant composition of the present invention is used at a proportion of usually 0.1 to 100 parts by weight, preferably 0.5 to 50 parts by weight, more preferably 1 to 40 parts by weight, and particularly preferably 3 to 30 parts by weight with respect to 100 parts by weight of the resin.

If necessary, the flame-retardant composition of the present invention may contain an additional component that is usually added to resins, to the extent that the effects of the present invention are not lessened. Examples of the additional component include other flame retardants, anti-drip agents, antioxidizing agents, fillers, lubricants, modifying agents, odorants, antifungus agents, pigments, dyes, heat resisting agents, weather resisting agents, antistatic agents, ultraviolet absorbers, stabilizers, toughening agents, anti-blocking agents, wood flour and starches.

The method for adding the phosphorus flame-retardant composition of the present invention to the resin is not particularly limited, and examples thereof include a commonly known method in which the components are melted and kneaded with a general kneading apparatus such as a single-screw extruder, a twin-screw extruder, a Bumbury mixer, a kneader, a mixer and a roll.

The phosphorus flame-retardant composition of the present invention can be advantageously used for resins having a higher molding temperature, for example, a resin that is molded at 160°C or higher in an embodiment, a resin that is molded at 180°C or higher in a more preferable embodiment and a resin that is molded at 200°C or higher in a particularly preferable embodiment.
When added to a resin as a flame retardant and processed with a molding machine, the phosphorus flame-retardant composition of the present invention does not generate gas at its high processing temperature to provide a molded article of high quality having excellent heat resistance and coloration resistance.

The phosphorus flame-retardant composition of the present invention is added to a resin and molded to provide a desired molded article.
Accordingly, the molded article of the present invention is characterized by being composed of the flame-retardant resin composition of the present invention.

The method for molding the flame-retardant resin composition of the present invention is not particularly limited, and examples thereof include commonly known methods such as a method in which the composition is molded into a desired shape with a molding machine such as an injection molding machine, an extruder, a blow molding machine and an inflation molding machine.

### EXAMPLES

The present invention will be described in detail by way of examples and comparative examples below; however, the scope of the present invention is not limited to these examples.

In the following examples and comparative examples, the proportion of each component in the composition obtained is expressed in percentage of the area of the component (% by area) as determined by gel permeation chromatography (GPC). The apparatus and measurement conditions for the GPC are shown below.

Analyzer: product by Tosoh Corporation, model: HLC-8020
Column: product by Tosoh Corporation, model: TSKGEL G1000HXL (30 cm) × 2
Column tank temperature: 40°C
Solvent: tetrahydrofuran (industrial)
Solvent flow rate: 0.8 ml/minute
Detector: RI (built in the apparatus body, polarized refractive index detector)
Range: 16 samples
Amount of sample solution injected: 100 µl (looped tube)
Sample solution: solution obtained by dissolving approximately 0.05 g of sample in 10 ml of tetrahydrofuran
Data processor: product by Tosoh Corporation, model: SC -8010

| | | |
|---|---|---|
| Data processing conditions: | START TIME | 10.0 min |
| | STOP TIME | 25.0 min |
| | WIDTH | 10 |
| | SENSITIVITY | 0.8 |
| | DRIFT | 0.1 |
| | MINIMUM AREA | 0.0 |
| | MINIMUM HEIGHT | 0.0 |

### (Example 1)

### 1. Step 1

To a one-liter four-necked flask equipped with a stirrer, a thermometer, a dropping device (funnel) and a hydrochloric acid collecting device (condenser connected with a water scrubber), 244 g of 2,6-xylenol as an aromatic monohydroxy compound (III), 20 g of xylene as a solvent and 1.5 g of magnesium chloride as a catalyst were put in. The resulting mixed solution was heated under stirring and, when the temperature of the mixed solution reached 120°C, 153 g of phosphorus oxychloride was added thereto dropwise over approximately 2 hours. After completion of the addition, the mixed solution was heated to gradually raise the temperature thereof up to 180°C over 2 hours for reaction to collect 68 g of hydrogen chloride (hydrochloric acid gas) generated through the water scrubber. Thereafter, the pressure in the flask was gradually reduced to 20 kPa at the same temperature (180°C), and xylene, and unreacted phosphorus oxychloride and 2,6-xylenol were removed over 1 hour to obtain 322 g of a reaction mixture including di-(2,6-xylyl)phosphoro chloridate as a diaryl phosphorohalidate (IV) (yield: 99.2%). In addition, the content percentage of chlorine in the reaction mixture was 10.7% by weight.

### 2. Step 2

Next, 53.5 g of resorcinol as an aromatic dihydroxy compound (V) (an amount stoichiometrically equivalent to that of the di-(2,6-xylyl)phosphoro chloridate) and 4.2 g of aluminum chloride as an additional catalyst were added to the reaction mixture obtained in Step 1. The resulting mixed solution was heated under stirring to gradually raise the temperature thereof up to 180°C over 2 hours to cause a dehydrochlorination reaction. The reaction was continued at the same temperature (180°C) for 2 hours, and the pressure in the flask was gradually reduced to 20 kPa, under which the reaction was further continued for 2 hours to obtain a crude product of an aromatic diphosphate compound (I).

### 3. Purification step

The resulting crude product was heated to 85°C, and 90 g of xylene, 9 g of 35% aqueous hydrochloric acid and 140 g of water were added thereto, stirred at the same temperature (85°C) for 1 hour and allowed to stand to separate an aqueous phase.

To the resulting mixture of the crude product and the solvent (xylene) (the concentration of the crude product was approximately 80% by weight), 5 g of 28% aqueous sodium hydroxide and 130 g of water were added. The resulting mixed solution was stirred at 85°C for 1 hour and allowed to stand to separate an aqueous phase.

Subsequently an oil phase of the resulting mixed solution was washed with 130 g of water at a liquid temperature of 85°C to obtain 430 g of the oil phase (the concentration of the aromatic diphosphate (I) was approximately 80% by weight). The xylene was removed from the resulting oil phase under a reduced pressure, and then steam distillation was performed at a temperature of 140°C and a reduced pressure of 6 kPa to obtain 330 g of an oily matter including the aromatic diphosphate compound (I).

### 4. Powdering step

To a 1-liter four-necked flask equipped with a thermometer and a stirrer having a rotation frequency display function (model: HEIDON TYPE 3000 H, product by Shinto Scientific Co., Ltd.), 320 g of the oily matter including the aromatic diphosphate compound (I) was put in, allowed to cool to a temperature of 60°C under stirring at a low rotation frequency (approximately 100 rpm) and maintained at the same temperature (60°C) with a hot water bath. Subsequently, 0.1% by weight of the aromatic diphosphate compound (I) in a crystal state as a crystal nucleus was added to the object being solidified (oily matter), and the mixture was stirred at a rotation frequency of 200 rpm. As a result, the oily matter was completely solidified in 8 minutes.

The resulting solidified product weighing 320 g was white powder and had a melting point of 98 to 101°C.
In addition, the solidified product was measured for the composition by gel permeation chromatography (GPC) to show that an aromatic diphosphate (I) represented by Compound (1) accounted for 96.6% by area, a phosphorus compound (II) having a hydroxyphenyl group represented by Compound (2) accounted for 0.7% by area, an aromatic monophosphate (VI) represented by Compound (7) accounted for 2.1% by area and an aromatic triphosphate (VII) represented by Compound (8) accounted for 0.6% by area (see the structural formulae below). Table 1 shows the result obtained together with the materials.

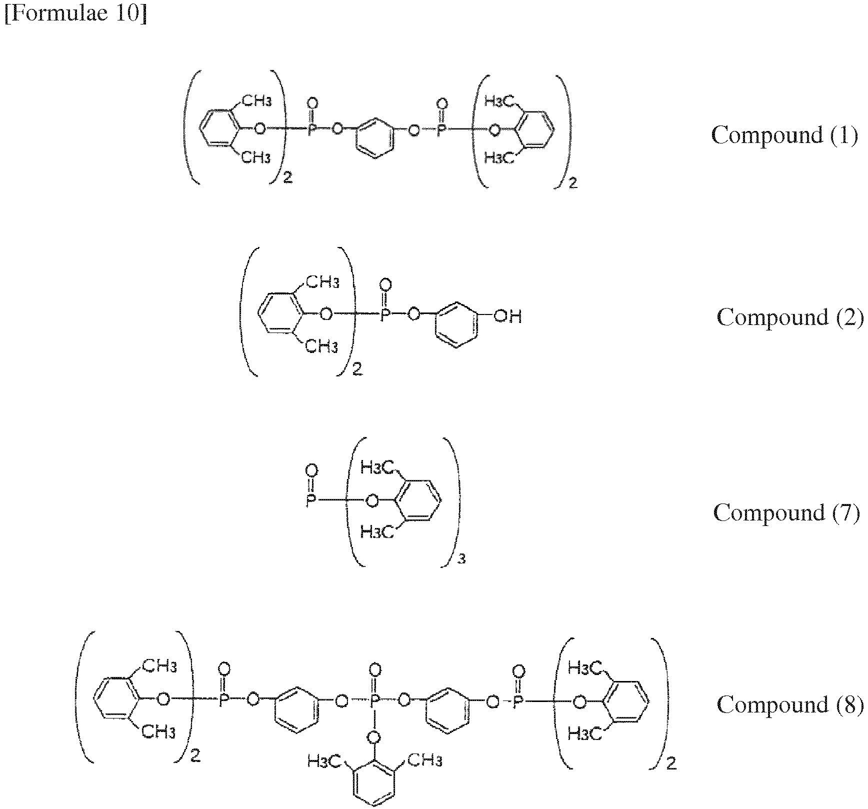

### (Example 2)

A reaction mixture in an amount of 7741 g including di-(2,6-xylyl)phosphoro chloridate as the diaryl phosphorohalidate (IV) was obtained (yield: 99.4%) in the same manner as in Step 1 of Example 1 except that a 20-liter four-necked flask was used as a reaction vessel, and 5856 g of 2,6-xylenol as the aromatic monohydroxy compound (III), 480 g of xylene as the solvent, 36 g of magnesium chloride as the catalyst and 3672 g of phosphorus oxychloride were used. The content percentage of chlorine in the reaction mixture was 10.6% by weight.

Then, a crude product of the aromatic diphosphate compound (I) in an amount of 8200 g was obtained in the same manner as in Step 2 of Example 1 except that 1273 g of resorcinol as the aromatic dihydroxy compound (V) and 101 g of aluminum chloride as the additional catalyst were used.

Purification was performed in the same manner as in Example 1 except that 2160 g of xylene, 216 g of 35% aqueous hydrochloric acid, 3360 g of water, 120 g of 28% aqueous sodium hydroxide and 3120 g of water were added to the resulting crude product, and 3120 g of rinse water was used to obtain 7960 g of an oily matter including the aromatic diphosphate compound (I).
A powdering step was carried out in the same manner as in Example 1 except that a 20-liter four-necked flask was used, and 7920 g of the oily matter including the aromatic diphosphate compound (I) was used to obtain 7920 g of white powder.

The resulting white powder had a melting point of 98 to 101°C. The resulting white powder was measured for the composition by GPC to show that the aromatic diphosphate (I) represented by Compound (1) accounted for 96.2% by area, the phosphorus compound (II) having a hydroxyphenyl group represented by Compound (2) accounted for 0.8% by area, the aromatic monophosphate (VI) represented by Compound (7) accounted for 2.3% by area and the aromatic triphosphate (VII) represented by Compound (8) accounted for 0.7% by area. Table 1 shows the result obtained together with the materials.

### (Example 3)

White powder in an amount of 320 g was obtained in the same manner as in Example 1 except that hydroquinone was used instead of resorcinol.

The resulting white powder had a melting point of 171 to 173°C.

The content percentage of chlorine in the reaction mixture in Step 1 was 10.6% by weight.

The resulting white powder was measured for the composition by GPC to show that an aromatic diphosphate (I) represented by Compound (3) accounted for 96.6% by area, a phosphorus compound (II) having a hydroxyphenyl group represented by Compound (4) accounted for 0.7% by area, the aromatic monophosphate (VI) represented by Compound (7) accounted for 2.1% by area and an aromatic triphosphate (VII) represented by Compound (9) accounted for 0.6% by area (see the structural formulae below).

Table 1 shows the result obtained together with the materials.

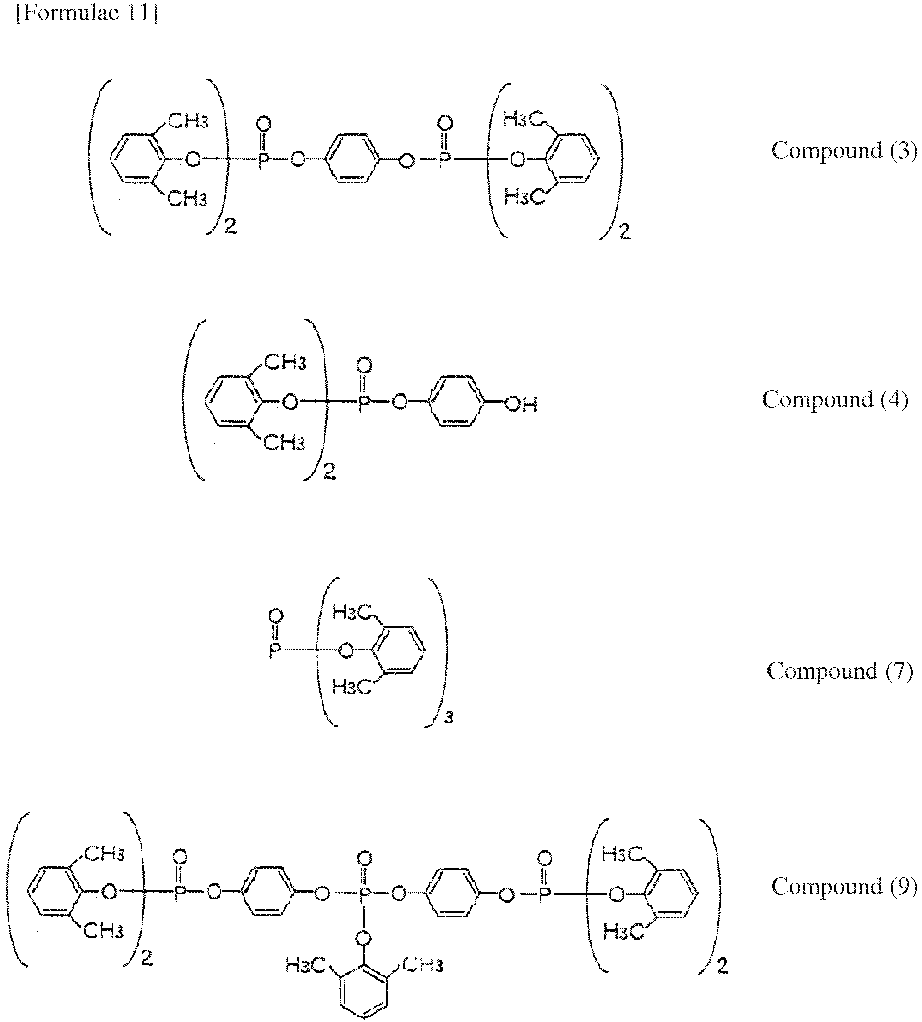

### (Example 4)

White powder in an amount of 7920 g was obtained in the same manner as in Example 2 except that hydroquinone was used instead of resorcinol.

The resulting white powder had a melting point of 171 to 173°C.

The content percentage of chlorine in the reaction mixture in Step 1 was 10.6% by weight.

The resulting white powder was measured for the composition by GPC to show that the aromatic diphosphate (I) represented by Compound (3) accounted for 96.4% by area, the phosphorus compound (II) having a hydroxyphenyl group represented by Compound (4) accounted for 0.7% by area, the aromatic monophosphate (VI) represented by Compound (7) accounted for 2.2% by area and the aromatic triphosphate (VII) represented by Compound (9) accounted for 0.7% by area.

Table 1 shows the result obtained together with the materials.

### (Example 5)

White powder in an amount of 354 g was obtained in the same manner as in Example 1 except that 90 g of 4,4'-biphenol was used instead of resorcinol, and dichlorobenzene was used instead of xylene.

The resulting white powder had a melting point of 187 to 189°C.

The content percentage of chlorine in the reaction mixture in Step 1 was 10.4% by weight.

The resulting white powder was measured for the composition by GPC to show that an aromatic diphosphate (I) represented by Compound (5) accounted for 96.6% by area, a phosphorus compound (II) having a hydroxyphenyl group represented by Compound (6) accounted for 0.7% by area, the aromatic monophosphate (VI) represented by Compound (7) accounted for 2.1% by area and an aromatic triphosphate (VII) represented by Compound (10) accounted for 0.6% by area (see the structural formulae below).

Table 1 shows the result obtained together with the materials.

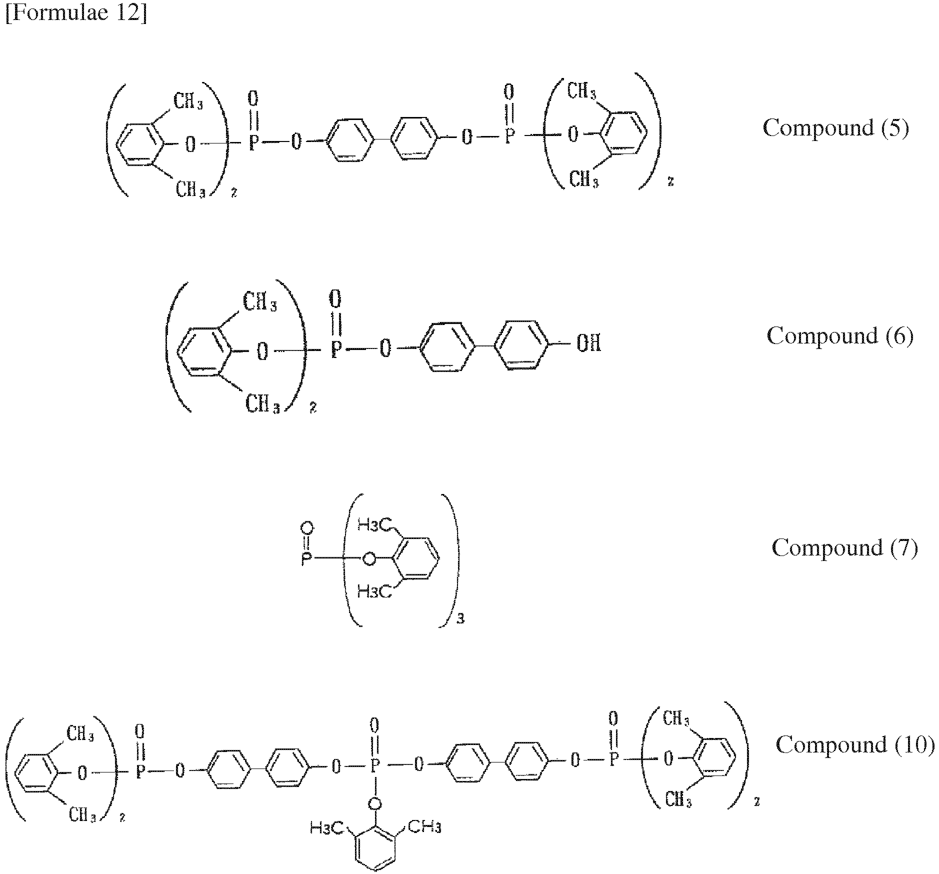

### (Example 6)

White powder in an amount of 8800 g was obtained in the same manner as in Example 2 except that 2150 g of 4,4'-biphenol was used instead of resorcinol, and dichlorobenzene was used instead of xylene.

The resulting white powder had a melting point of 187 to 189°C.

The content percentage of chlorine in the reaction mixture in Step 1 was 10.4% by weight.

The resulting white powder was measured for the composition by GPC to show that the aromatic diphosphate (I) represented by Compound (5) accounted for 96.2% by area, the phosphorus compound (II) having a hydroxyphenyl group represented by Compound (6) accounted for 0.7% by area, the aromatic monophosphate (VI) represented by Compound (7) accounted for 2.4% by area and the aromatic triphosphate (VII) represented by Compound (10) accounted for 0.7% by area.

Table 1 shows the result obtained together with the materials.

### (Comparative Example 1)

White powder in an amount of 322 g was obtained in the same manner as in Example 1 except that 55 g of resorcinol as the aromatic dihydroxy compound (V) (1/4 molar equivalents with respect to the number of moles of 2,6-xylenol as the aromatic monohydroxy compound (III)) was used.

The resulting white powder had a melting point of 98 to 101°C.

The content percentage of chlorine in the reaction mixture in Step 1 was 10.7% by weight.

The resulting white powder was measured for the composition by GPC to show that the aromatic diphosphate (I) represented by Compound (1) accounted for 96.6% by area, the phosphorus compound (II) having a hydroxyphenyl group represented by Compound (2) accounted for 1.2% by area, the aromatic monophosphate (VI) represented by Compound (7) accounted for 1.8% by area and the aromatic triphosphate (VII) represented by Compound (8) accounted for 0.4% by area.

Table 1 shows the result obtained together with the materials.

### (Comparative Example 2)

White powder in an amount of 8000 g was obtained in the same manner as in Example 2 except that 1320 g of resorcinol as the aromatic dihydroxy compound (V) (1/4 molar equivalents with respect to the number of moles of 2,6-xylenol as the aromatic monohydroxy compound (III)) was used.

The resulting white powder had a melting point of 98 to 101°C.

The content percentage of chlorine in the reaction mixture in Step 1 was 10.6% by weight. The resulting white powder was measured for the composition by GPC to show that the aromatic diphosphate (I) represented by Compound (1) accounted for 95.5% by area, the phosphorus compound (II) having a hydroxyphenyl group represented by Compound (2) accounted for 2.5% by area, the aromatic monophosphate (VI) represented by Compound (7) accounted for 2.0% by area and the aromatic triphosphate (VII) represented by Compound (8) accounted for 0.5% by area.

Table 1 shows the result obtained together with the materials.

### (Comparative Example 3)

White powder in an amount of 8005 g was obtained in the same manner as in Example 3 except that 55 g of hydroquinone as the aromatic dihydroxy compound (V) (1/4 molar equivalents with respect to the number of moles of 2,6-xylenol as the aromatic monohydroxy compound (III)) was used.

The resulting white powder had a melting point of 171 to 173°C.

The content percentage of chlorine in the reaction mixture in Step 1 was 10.6% by weight.

The resulting white powder was measured for the composition by GPC to show that the aromatic diphosphate (I) represented by Compound (3) accounted for 96.3% by area, the phosphorus compound (II) having a hydroxyphenyl group represented by Compound (4) accounted for 1.5% by area, the aromatic monophosphate (VI) represented by Compound (7) accounted for 1.8% by area and the aromatic triphosphate (VII) represented by Compound (9) accounted for 0.4% by area.

Table 1 shows the result obtained together with the materials.

### (Comparative Example 4)

White powder in an amount of 357 g was obtained in the same manner as in Example 5 except that 93 g of 4,4'-biphenol as the aromatic dihydroxy compound (V) (1/4 molar equivalents with respect to the number of moles of 2,6-xylenol as the aromatic monohydroxy compound (III)) was used.

The resulting white powder had a melting point of 187 to 189°C.

The content percentage of chlorine in the reaction mixture in Step 1 was 10.4% by weight.

The resulting white powder was measured for the composition by GPC to show that the aromatic diphosphate (I) represented by Compound (5) accounted for 96.4% by area, the phosphorus compound (II) having a hydroxyphenyl group represented by Compound (6) accounted for 1.2% by area, the aromatic monophosphate (VI) represented by Compound (7) accounted for 2.0% by area and the aromatic triphosphate (VII) represented by Compound (10) accounted for 0.4% by area.

Table 1 shows the result obtained together with the materials.

**[Table 1]**

| | Aromatic monohydroxy compound (g) | Phosphorus oxyhalide | Aromatic dihydroxy compound (g) | Composition (GPC % by area) | | | |
|---|---|---|---|---|---|---|---|
| | | | | Aromatic diphosphate | Phosphorus compound having hydroxyphenyl group | Aromatic monophosphate | Aromatic triphosphate |
| Example 1 | 2,6-xylenol 244 | Phosphorus oxychloride 153 | Resorcinol 53.5 | Compound (1) 96.6 | Compound (2) 0.7 | Compound (7) 2.1 | Compound (8) 0.6 |
| Example 2 | 2,6-xylenol 5856 | Phosphorus oxychloride 3672 | Resorcinol 1273 | Compound (1) 96.2 | Compound (2) 0.8 | Compound (7) 2.3 | Compound (8) 0.7 |
| Example 3 | 2,6-xylenol 244 | Phosphorus oxychloride 153 | Hydroquinone 53.5 | Compound (3) 96.6 | Compound (4) 0.7 | Compound (7) 2.1 | Compound (9) 0.6 |
| Example 4 | 2,6-xylenol 5856 | Phosphorus oxychloride 3672 | Hydroquinone 1273 | Compound (3) 96.4 | Compound (4) 0.7 | Compound (7) 2.2 | Compound (9) 0.7 |
| Example 5 | 2,6-xylenol 244 | Phosphorus oxychloride 153 | 4,4'-biphenol 90 | Compound (5) 96.6 | Compound (6) 0.7 | Compound (7) 2.1 | Compound (10) 0.6 |
| Example 6 | 2,6-xylenol 5856 | Phosphorus oxychloride 3672 | 4,4'-biphenol 2150 | Compound (5) 96.2 | Compound (6) 0.7 | Compound (7) 2.4 | Compound (10) 0.7 |
| Comparative Example 1 | 2,6-xylenol 244 | Phosphorus oxychloride 153 | Resorcinol 55 | Compound (1) 96.6 | Compound (2) 1.2 | Compound (7) 1.8 | Compound (8) 0.4 |
| Comparative Example 2 | 2,6-xylenol 5856 | Phosphorus oxychloride 3672 | Resorcinol 1320 | Compound (1) 95.0 | Compound (2) 2.5 | Compound (7) 2.0 | Compound (8) 0.5 |
| Comparative Example 3 | 2,6-xylenol 244 | Phosphorus oxychloride 153 | Hydroquinone 55 | Compound (3) 96.3 | Compound (4) 1.5 | Compound (7) 1.8 | Compound (9) 0.4 |
| Comparative Example 4 | 2,6-xylenol 244 | Phosphorus oxychloride 153 | 4,4'-biphenol 93 | Compound (5) 96.4 | Compound (6) 1.2 | Compound (7) 2.0 | Compound (10) 0.4 |

The results shown in Table 1 indicate that generation of the phosphorus compound (II) having a hydroxyphenyl group can be inhibited by using, in Step 2, the aromatic dihydroxy compound (V) in an theoretical amount needed for turning all the diaryl phosphorohalidate (IV) generated in Step 1 into a condensed phosphate that is, the aromatic diphosphate compound (I), in other words, in an amount stoichiometrically equivalent to the diaryl phosphorohalidate (IV).

It is also indicated that generation of the phosphorus compound (II) having a hydroxyphenyl group can be inhibited by adjusting the amount of the aromatic dihydroxy compound (V) to use in Step 2 even on an increased reaction scale (for example, comparison between Examples 1 and 2).

On the other hand, it is indicated that the amount of the phosphorus compound (II) having a hydroxyphenyl group tends to increase on an increased reaction scale when the amount of the aromatic dihydroxy compound (V) to use in Step 2 is not adjusted (for example, comparison between Comparative Examples 1 and 2).

### (Examples 7 to 15)

A modified PPE resin (product name: Noryl 731, manufactured by GE Plastics Japan Ltd.), a PC/ABS alloy resin (product name; NOVALLOY S-1500, manufactured by Daicel Polymer Ltd.) and an ABS resin (product name: CEVIAN V-500, manufactured by Daicel Polymer Ltd.) as resins, and a fluororesin (product name: Teflon, registered trademark, 6-J, manufactured by Du Pont-Mitsui Fluorochemicals Co., Ltd.) as an additive anti-drip agent were used.

Each formulation shown in Tables 2 to 4 was mixed with a mixer, and then passed through an extruder maintained at 250 to 300°C to obtain compound pellets. The resulting pellets were put in an injection molding machine and molded at 250 to 300°C to obtain a test piece.

The resulting test piece was measured for the flame retardancy, the Izod impact strength, the resin flowability (melt flow rate), the deflection temperature under load and the tensile strength in the manner described below.

In addition, as the durability test described below, the test piece treated with a thermohygrostat or a weather and light resistance testing machine was measured for the Izod impact strength and the melt flow rate.

Tables 2 to 4 show the results obtained together with the formulations of the resin compositions.

### (1) Flame retardancy (vertical flammability)

Test method: according to UL-94 (average flame-out time of 5 samples)
Test piece: 1.6 mm in thickness
Evaluation: ranks V-0, V-1 and V-2 according to regulation

### (2) Izod impact strength

Test method: according to ASTM D-256
Test piece: 3.2 mm in thickness
Unit: J/m

### (3) Melt flow rate (resin flowability)

Test method: according to JIS K7210, operation A
Temperature: 275°C for modified PPE resin, 230°C for PC/ABS alloy resin, 200°C for ABS resin
Load: 2.16 kg for modified PPE resin, 5 kg for PC/ABS alloy resin, 5 kg for ABS resin
Unit: g/10 minutes
When the molecular binding of the resin and the flame retardant is broken by heat and load to reduce the molecular weight, the flowability of the resin composition increases. The flowability measured can therefore be a measure of the stability of the resin compositions.

### (4) Deflection temperature under load

Test method: according to ASTM D-648
Test piece: 6.4 mm in thickness
Load: bending stress of 1.8 MPa
Unit: °C

### (5) Bending strength

Test method: according to ASTM D-790
Test piece: 6.4 mm in thickness
Unit: MPa

The durability test was performed with the following testing machines.

### (6) Thermohygrostat

Testing machine: product by Tabai Espec Corp., product name: PLATINOUS RAINBOW PR-1G
Testing tank temperature: 80°C
Testing tank humidity: 80% RH
Test pieces treated for 6 hours and test pieces treated for 24 hours were measured for the Izod impact strength and melt flow rate, respectively. In Tables 2 to 4, the results are presented as 6HR-treatment w/ Rainbow and 24HR-treatment w/ Rainbow, each of which is a maintenance ratio (%) being a percentage of the initial value.

### (7) Weather and light resistance testing machine

Testing machine: product by Suga Test Instruments Co., Ltd., product name: Dewpanel Weather Meter DPWL-5
Testing tank temperature: 60°C
Irradiation wavelength : 313 nm of peak wavelength (UV fluorescent lamp)
Irradiation intensity: 2.0 mW/cm2
Test pieces treated for 100 hours were measured for the Izod impact strength. In Tables 2 to 4, the results are presented as 100HR-treatment w/ Dewpanel, each of which is a maintenance ratio (%) being a percentage of the initial value.

### (Comparative Examples 5 to 13)

The formulations shown in Tables 2 to 4 were used and test pieces were obtained in the same manner as in Examples 7 to 15 to be measured for the physical properties.

Tables 2 to 4 show the results obtained.

**[Table 2]**

| | | | | | Izod impact strength (J/m) | | | Melt Flow Rate (g/10 min) | | | |
|---|---|---|---|---|---|---|---|---|---|---|---|
| | m-PPE (parts by weight) | Flame retardant | Flame retardant (parts by weight) | Flame retardancy (UL-94) | Initial | 6HR-treatment w/Rainbow | 100HR-treatment w/Dewpanel | Initial | 24HR-treatment w/Rainbow | Deflection temp. under load (ºC) | Bending strength (Mpa) |
| Ex. 7 | 100 | Compound in Ex. 1 | 15 | V-0 | 100 | 71 Maintenance ratio 71% | 30 Maintenance ratio 30% | 11.3 | 14.1 Maintenance ratio 80% | 100 | 78 |
| Ex. 8 | 100 | Compound in Ex. 3 | 15 | V-0 | 102 | 75 Maintenance ratio 74% | 34 Maintenance ratio 33% | 11.8 | 14.6 Maintenance ratio 81% | 105 | 76 |
| Ex 9 | 100 | Compound in Ex. 5 | 18 | V-0 | 105 | 77 Maintenance ratio 73% | 35 Maintenance ratio 33% | 12.1 | 14.6 Maintenance ratio 83% | 103 | 75 |
| Com. Ex 5 | 100 | Compound in Com. Ex. 1 | 15 | V-0 | 90 Initial strength 90% | 32 Maintenance ratio 36% | 23 Maintenance ratio 26% | 13.1 | 22 Maintenance ratio 60% | 102 | 77 |
| Com . Ex 6 | 100 | Compound in Com. Ex. 3 | 15 | V-0 | 94 Initial strength 92% | 35 Maintenance ratio 37% | 24 Maintenance ratio 25% | 12.7 | 20.5 Maintenance ratio 62% | 104 | 77 |
| Com. Ex. 7 | 100 | Compound in Com . Ex. 4 | 18 | V-0 | 96 Initial strength 91% | 37 Maintenance ratio 39% | 27 Maintenance ratio 28% | 13.5 | 20.7 Maintenance ratio 65% | 102 | 75 |

**[Table 3]**

| | | | | | | Izod impact strength (J/m) | | | Melt Flow Rate (g/10 min) | | | |
|---|---|---|---|---|---|---|---|---|---|---|---|---|
| | PC/ABS (parts by weight) | Flame retardant | Flame retardant (parts by weight) | Additive (parts by weight) | Flame retardancy (UL-94) | Initial | 6HR-treatment w/Rainbow | 100HR-treatment w/Dewpanel | Initial | 24HR-treatment w/Rainbow | Deflection temp. under load (ºC) | Bending strength (Mpa) |
| Ex. 10 | 100 | Compound in Ex. 1 | 18 | 0.4 | V-0 | 551 | 342 Maintenance ratio 62% | 130 Maintenance ratio 23% | 16.3 | 20.7 Maintenance ratio 79% | 85 | 79 |
| Ex. 11 | 100 | Compound in Ex. 3 | 18 | 0.4 | V-0 | 540 | 351 Maintenance ratio 65% | 134 Maintenance ratio 25% | 16.6 | 20 Maintenance ratio 83% | 89 | 79 |
| Ex. 12 | 100 | Compound in Ex. 5 | 20 | 0.4 | V-0 | 545 | 376 Maintenance ratio 69% | 136 Maintenance ratio 25% | 16.5 | 19.4 Maintenance ratio 85% | 94 | 77 |
| Com. Ex. 8 | 100 | Compound in Com. Ex. 1 | 18 | 0.4 | V-0 | 471 Initial strength 85% | 138 Maintenance ratio 29% | 83 Maintenance ratio 18% | 17.8 | 32 Maintenance ratio 56% | 84 | 80 |
| Com. Ex. 9 | 100 | Compound in Com. Ex. 3 | 18 | 0.4 | V-0 | 475 Initial strength 88% | 152 Maintenance ratio 32% | 76 Maintenance ratio 16% | 17.9 | 30.5 Maintenance ratio 59% | 88 | 78 |
| Com. Ex. 10 | 100 | Compound in Com. Ex. 4 | 20 | 0.4 | V-0 | 469 Initial strength 86% | 188 Maintenance ratio 40% | 89 Maintenance ratio 19% | 17.8 | 27.3 Maintenance ratio 65% | 94 | 78 |
| Ex. 13 | 100 | Compound in Ex. 1 | 10 | | V-2 | 166 | 108 Maintenance ratio 65% | 33 Maintenance ratio 20% | 5.2 | 6.5 Maintenance ratio 80% | 78 | 66 |
| Ex. 14 | 100 | Compound in Ex. 3 | 10 | | V-2 | 170 | 120 Maintenance ratio 71% | 39 Maintenance ratio 23% | 5.3 | 6.2 Maintenance ratio 85% | 79 | 65 |
| Ex. 15 | 100 | Compound in Ex. 5 | 12 | | V-2 | 168 | 114 Maintenance ratio 68% | 42 Maintenance ratio 25% | 5.1 | 6.4 Maintenance ratio 80% | 82 | 67 |
| Com. Ex. 11 | 100 | Compound in Com. Ex. 1 | 10 | | V-2 | 149 Initial strength 90% | 52 Maintenance ratio 35% | 22 Maintenance ratio 15% | 5.6 | 9.3 Maintenance ratio 60% | 77 | 67 |
| Com. Ex. 12 | 100 | Compound in Com. Ex. 3 | 10 | | V-2 | 144 Initial strength 85% | 53 Maintenance ratio 37% | 18 Maintenance ratio 13% | 5.5 | 9.8 Maintenance ratio 56% | 80 | 69 |
| Com. Ex. 13 | 100 | Compound in Com. Ex. 4 | 12 | | V-2 | 146 Initial strength 87% | 54 Maintenance ratio 37% | 22 Maintenance ratio 15% | 5.5 | 8.8 Maintenance ratio 63% | 83 | 69 |

The results shown in Tables 2 to 4 indicate that there is no big difference, a little difference if any, in the flame retardancy, the deflection temperature under load, the bending strength and the initial value of the melt flow rate between the molded articles of the flame-retardant resin compositions containing the phosphorus flame-retardant compositions of the present invention (Examples 7 to 15) and the molded articles of the flame-retardant resin compositions not containing any phosphorus flame-retardant composition of the present invention (Comparative Examples 5 to 13). However, it is indicated that the former has larger initial values of the Izod impact strength.
Meanwhile, there is a very big and obvious difference in the Izod impact strength and the melt flow rate after the durability test between the former and the latter to indicate that the former is superior, prevented from losing the physical properties before the durability test.
That is, it is indicated that the molded articles of the flame-retardant resin compositions containing the phosphorus flame-retardant compositions of the present invention are superior in the Izod impact strength and the melt flow rate, in particular, superior in the durability against temperature and humidity.

## Claims

1. Process for preparing a phosphorus flame-retardant composition, wherein said composition comprises:
an aromatic diphosphate compound represented by the general formula (I): 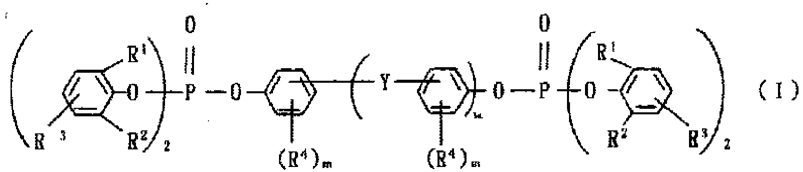 wherein R¹ and R² are, the same or different, a lower alkyl group, R³ and R⁴ are, the same or different, a hydrogen atom or a lower alkyl group, Y is a bonding arm, a-CH₂-, -C(CH₃)₂-, -S-, -SO₂-, -O-, -CO- or -N=N- group, k is 0 or 1, and m is an integer from 0 to 4,
and, as an impurity, a phosphorus compound having a hydroxyphenyl group represented by the general formula (II): 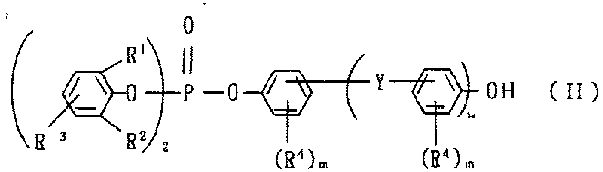 wherein R¹, R², R³, R⁴, Y, k and m are as defined in the general formula (I), the content of the phosphorus compound (II) being 1% by area or less as determined by gel permeation chromatography (GPC),
**characterized in that** said process comprises the following steps:
- Step 1, wherein an aromatic monohydroxy compound having a group for giving steric hindrance at the ortho position represented by the general formula (III): 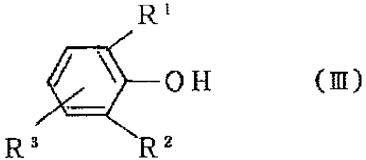 wherein R¹, R² and R³ are as defined in the general formula (I), reacts with a phosphorus oxyhalide in the presence of a Lewis acid catalyst to obtain a diaryl phosphorohalidate represented by the general formula (IV): 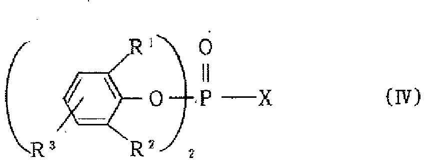 wherein R¹, R² and R³ are as defined in the general formula (I), and X represents a halogen, and optionally in the presence of a solvent, wherein after completion of the reaction the optional solvent, unreacted aromatic monohydroxy compound (II) and phosphorus oxyhalide are removed under a reduced pressure of 30 kPa or less;
- Step 2, which is carried out successively in the same reaction vessel as Step 1, without going through purification of the diaryl phosphorohalidate (IV) obtained in Step 1, wherein the diaryl phosphorohalidate (IV) obtained in Step 1 reacts with an aromatic dihydroxy compound (V) that is stoichiometrically equivalent to the amount of the diaryl phosphorohalidate (IV) calculated from the amount of the reaction mixture obtained in Step 1 and from the halogen concentration in the reaction mixture, said aromatic dihydroxy compound (V) being represented by the general formula (V): 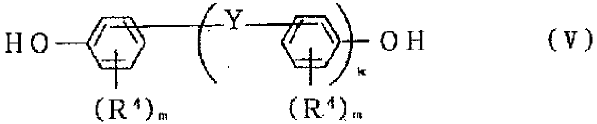
wherein R⁴, Y, k and m are as defined in the general formula (I)
in the presence of a Lewis acid catalyst.

2. Process of claim 1, wherein the content of the aromatic diphosphate compound is 95% by area or more as determined by GPC.

3. Process of claim 1, wherein the aromatic diphosphate compound contains the phosphorus compound having the hydroxyphenyl group of 0.01% by area or more and 0.9% by area or less as determined by GPC.

4. Process of claim 1, wherein the aromatic diphosphate compound and the phosphorus compound having the hydroxyphenyl group are a combination of tetrakis(2,6-dimethylphenyl)-m-phenylene-bisphosphate and bis(2,6-dimethylphenyl)-3-hydroxyphenylphosphate, tetrakis(2,6-dimethylphenyl)-p-phenylene-bisphosphate and bis(2,6-dimethylphenyl)-4-hydroxyphenylphosphate, or tetrakis (2,6- dimethylphenyl)-4,4'-diphenylenebisphosphate and bis(2,6-dimethylphenyl)-4'-hydroxyphenyl-4-phenylphosphate.

5. Process of claim 1, wherein the aromatic diphosphate compound and the phosphorus compound having the hydroxyphenyl group are tetrakis(2,6-dimethylphenyl)-m-phenylene-bisphosphate and bis(2,6-dimethylphenyl)-3-hydroxyphenylphosphate.

6. Process of claim 1, wherein the diaryl phosphorohalidate (IV) obtained in Step 1 has a purity of 99% or more in the reaction product.

## Patentansprüche

1. Verfahren zur Herstellung einer flammenhemmenden Phosphor-Zusammensetzung, worin die genannte Zusammensetzung Folgendes umfasst:
eine aromatische Diphosphatverbindung dargestellt durch die allgemeine Formel (I): 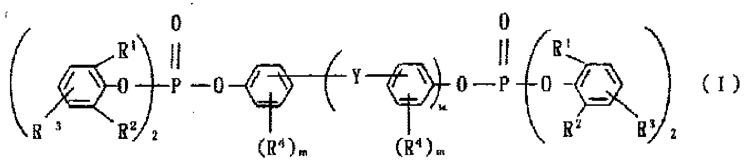 worin R¹ und R², gleich oder unterschiedlich, eine niedere Alkylgruppe sind, R³ und R⁴ sind, gleich oder unterschiedlich, ein Wasserstoffatom oder eine niedere Alkylgruppe, Y ist ein verbindender Arm, eine -CH₂-, -C(CH₃)₂-, -S-, -SO₂-, -O-, -CO- oder -N=N-Gruppe, k ist 0 oder 1, und m ist eine ganze Zahl von 0 bis 4,
und, als eine Verunreinigung, eine Phosphorverbindung mit einer Hydroxyphenylgruppe, dargestellt durch die allgemeine Formel (II): 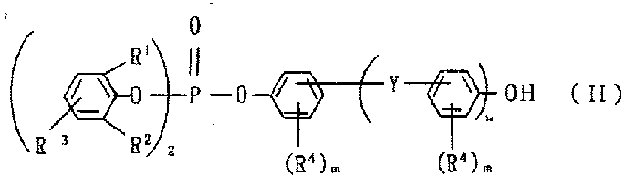 worin R¹, R², R³, R⁴, Y, k und m wie in der allgemeinen Formel (I) definiert sind, wobei der Gehalt der Phosphorverbindung (II) 1 Flächen % oder weniger ist, wie bestimmt durch Gelpermeationschromatographie (GPC),
**dadurch gekennzeichnet, dass** das genannte Verfahren die folgenden Schritte umfasst:
- Schritt 1, worin eine aromatische Monohydroxyverbindung mit einer Gruppe an der Orthoposition, die sterische Hinderung gibt, dargestellt durch die allgemeine Formel (III): 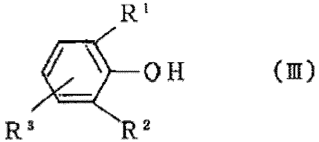 worin R¹, R² und R³ wie in der allgemeinen Formel (I) definiert sind, mit einem Phosphoroxyhalogenid in der Anwesenheit eines Lewis-Säure-Katalysators reagiert, um ein Diarylphosphorhalogenidat zu erhalten, dargestellt durch die allgemeine Formel (IV): 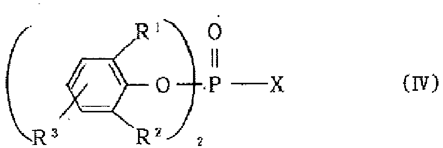 worin R¹, R² und R³ wie in der allgemeinen Formel (I) definiert sind, und X stellt ein Halogen dar, und wahlweise in der Anwesenheit eines Lösungsmittels, worin nach Beendigung der Reaktion das optionale Lösungsmittel, unreagierte aromatische Monohydroxyverbindung (II) und Phosphoroxyhalogenid unter einem verminderten Druck von 30 kPa oder weniger entfernt werden;
- Schritt 2, welcher nachfolgend in demselben Reaktionsgefäß wie in Schritt 1 durchgeführt wird, ohne eine Reinigung des in Schritt 1 erhaltenen Diarylphosphorhalogenidats (IV) durchzuführen, worin das in Schritt 1 erhaltene Diarylphosphorhalogenidat (IV) mit einer aromatischen Dihydroxyverbindung (V) reagiert, die stöchiometrisch äquivalent ist zu der Menge des Diarylphosphorhalogenidats (IV), berechnet aus der Menge der Reaktionsmischung, die in Schritt 1 erhalten wurde, und aus der Halogenkonzentration in der Reaktionsmischung, wobei die genannte aromatische Dihydroxyverbindung (V) durch die allgemeine Formel (V) dargestellt ist: 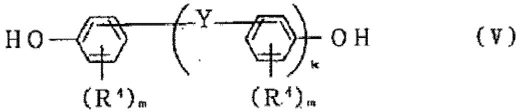 worin R⁴, Y, k und m wie in der allgemeinen Formel (I) definiert sind, in der Anwesenheit eines Lewis-Säure-Katalysators.

2. Verfahren gemäß Anspruch 1, worin der Gehalt der aromatischen Diphosphatverbindung 95 Flächen % oder mehr ist, wie bestimmt durch GPC.

3. Verfahren gemäß Anspruch 1, worin die aromatische Diphosphatverbindung die Phosphorverbindung mit der Hydroxyphenylgruppe von 0,01 Flächen % oder mehr und 0,9 Flächen % oder weniger, wie bestimmt durch GPC, enthält.

4. Verfahren gemäß Anspruch 1, worin die aromatische Diphosphatverbindung und die Phosphorverbindung mit der Hydroxyphenylgruppe eine Kombination aus tetrakis(2,6-Dimethyphenyl)-m-phenylen-bisphosphat und bis(2,6-Dimethylphenyl)-3-hydroxyphenylphosphat, tetrakis(2,6-Dimethylphenyl)-p-phenylen-bisphosphat und bis(2,6-Dimethylphenyl)-4-hydroxyphenylphosphat, oder tetrakis(2,6-Dimethylphenyl)-4,4'-diphenylenbisphosphat und bis(2,6-Dimethylphenyl)-4'-hydroxyphenyl-4-phenylphosphat sind.

5. Verfahren gemäß Anspruch 1, worin die aromatische Diphosphatverbindung und die Phosphorverbindung mit der Hydoxyphenylgruppe tetrakis(2,6-Dimethylphenyl)-m-phenylen-bisphosphat und bis(2,6-Dimethylphenyl)-3-hydroxyphenylphosphat sind.

6. Verfahren gemäß Anspruch 1, worin das Diarylphosphorhalogenidat (IV), das in Schritt 1 erhalten wurde, eine Reinheit von 99% oder mehr in dem Reaktionsprodukt hat.

## Revendications

1. Procédé pour préparer une composition d'ignifuge à base de phosphore, dans lequel ladite composition comprend :
un composé de diphosphate aromatique représenté par la formule générale (I) : 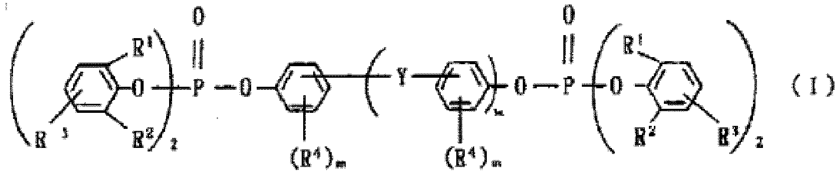 dans laquelle R¹ et R² sont, identiques ou différents, un groupe alkyle inférieur, R³ et R⁴ sont, identiques ou différents, un atome d'hydrogène ou un groupe alkyle inférieur, Y est un bras de liaison, un groupe -CH₂-, -C(CH₃)₂-, -S-, -SO₂-, -O-, -CO-, ou -N=N-, k est 0 ou 1, et m est un nombre entier allant de 0 à 4,
et, en tant qu'impureté, un composé phosphoré ayant un groupe hydroxyphényle représenté par la formule générale (II) : 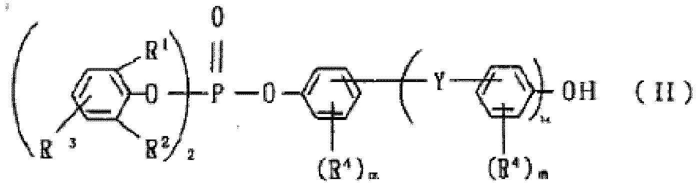 dans laquelle R¹, R², R³, R⁴, Y, k et m sont tels que définis dans la formule générale (I), la teneur du composé phosphoré (II) étant de 1 % en surface ou moins telle que déterminée par chromatographie par perméation sur gel (GPC),
**caractérisé en ce que** ledit procédé comprend les étapes suivantes :
- Étape 1, dans lequel un composé aromatique monohydroxylé ayant un groupe pour conférer un encombrement stérique à la position ortho représenté par la formule générale (III) : 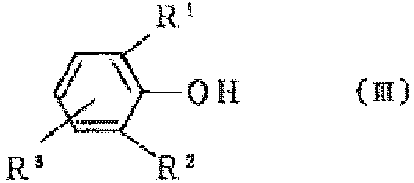 dans laquelle R¹, R² et R³ sont tels que définis dans la formule générale (I),
réagit avec un oxyhalogénure de phosphore en présence d'un catalyseur de type acide de Lewis pour obtenir un phosphorohalidate de diaryle représenté par la formule générale (IV) : 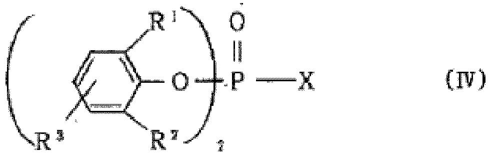 dans laquelle R¹, R² et R³ sont tels que définis dans la formule générale (I), et X représente un halogène, et facultativement en présence d'un solvant, dans lequel après la fin de la réaction le solvant facultatif, le composé aromatique monohydroxylé (II) et l'oxyhalogénure de phosphore n'ayant pas réagi sont éliminés sous une pression réduite de 30 kPa ou moins ;
- Étape 2, qui est réalisée successivement dans le même récipient réactionnel que dans l'Étape 1, sans passer par une purification du phosphorohalidate de diaryle (IV) obtenu dans l'Étape 1, dans lequel le phosphorohalidate de diaryle (IV) obtenu dans l'Étape 1 réagit avec un composé aromatique dihydroxylé (V) qui est équivalent sur le plan stoechiométrique à la quantité du phosphorohalidate de diaryle (IV) calculée à partir de la quantité du mélange réactionnel obtenu dans l'Étape 1 et à partir de la concentration en halogène dans le mélange réactionnel, ledit composé aromatique dihydroxylé (V) étant représenté par la formule générale (V) : 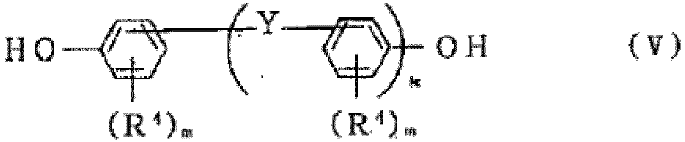 dans laquelle R⁴, Y, k et m sont tels que définis dans la formule générale (I) en présence d'un catalyseur de type acide de Lewis.

2. Procédé selon la revendication 1, dans lequel la teneur du composé de diphosphate aromatique est de 95 % en surface telle que déterminée par GPC.

3. Procédé selon la revendication 1, dans lequel le composé de diphosphate aromatique contient le composé phosphoré ayant le groupe hydroxyphényle de 0,01 % en surface ou plus et 0,9 % en surface ou moins tel que déterminé par GPC.

4. Procédé selon la revendication 1, dans lequel le composé de diphosphate aromatique et le composé phosphoré ayant le groupe hydroxyphényle sont une combinaison de tétrakis(2,6-diméthylphényl)-m-phénylène-bisphosphate et de bis(2,6-diméthylphényl)-3-hydroxyphénylphosphate, de tétrakis(2,6-diméthylphényl)-p-phénylène-bisphosphate et de bis(2,6-diméthylphényl)-4-hydroxyphénylphosphate, ou de tétrakis(2,6-diméthylphényl)-4,4'-diphénylènebisphosphate et de bis(2,6-diméthyl-phényl)-4'-hydroxyphényl-4-phénylphosphate.

5. Procédé selon la revendication 1, dans lequel le composé de diphosphate aromatique et le composé phosphoré ayant le groupe hydroxyphényle sont le tétrakis(2,6-diméthylphényl)-m-phénylène-bisphosphate et le bis(2,6-diméthylphényl)-3-hydroxyphénylphosphate.

6. Procédé selon la revendication 1, dans lequel le phosphorohalidate de diaryle (IV) obtenu dans l'Étape 1 présente une pureté de 99 % ou plus dans le produit réactionnel.
